# EUROPEAN PATENT SPECIFICATION

(11) **EP 4 227 133 B1**
(45) Date of publication and mention of the grant of the patent: **07.08.2024**
(21) Application number: 23152145.1
(22) Date of filing: 18.01.2023
(51) Int. Cl.: B60K 6/387, B60K 6/48, B60W 10/06, B60W 10/08, B60W 20/40, B60W 20/50, B60W 30/192

(54) **CONTROL DEVICE OF HYBRID VEHICLE**
STEUERUNGSVORRICHTUNG FÜR EIN HYBRIDFAHRZEUG
DISPOSITIF DE COMMANDE DE VÉHICULE HYBRIDE

(30) Priority: 14.02.2022 JP 2022020279
(43) Date of publication of application: 16.08.2023
(73) Proprietor: Suzuki Motor Corporation, Hamamatsu-shi, Shizuoka 432-8611 (JP)
(72) Inventor: YAMAMOTO, Kanji, HAMAMATSU, 432-8611 (JP); NATSUME, Ryuichi, HAMAMATSU, 432-8611 (JP)
(74) Representative: Plasseraud IP

(56) References cited:
- WO-A1-2016/077599
- US-A1- 2015 321 664
- US-A1- 2020 072 176
- US-A1- 2022 024 442

## Description

### [Technical Field]

The present invention relates to a control device of a hybrid vehicle.

### [Background Art]

US 2020/072176 discloses a controller configured to start an engine. WO 2016/077599 discloses an automotive battery system that includes a lead-acid battery electrically which supplies electrical power to a starter and a lithium-ion battery which captures and stores electrical energy generated by a regenerative braking system. US 2015/321664 discloses an emergency operation method of a hybrid vehicle. US 2022/024442 discloses a vehicle includes an internal combustion engine, an electric machine, and a controller.

Patent Literature 1 discloses a control method of a hybrid vehicle including a step of detecting various state amount of the vehicle, and a step of starting a system at an EV mode in which an engine is not started if an EV mode prohibiting condition is not established.

In such a hybrid vehicle, the system is started at the EV mode to thereby start vehicle travel and thereafter, the engine is started when an engine start is requested.

### [Citation List]

### [Patent Literature]

[Patent Literature 1] JP 2008-213781 A

### [Summary of Invention]

### [Technical Problem]

However, there is a problem that even when the engine start is requested, the engine may be disenabled to be started due to a certain state of the vehicle.

Thus, an object of the present invention is to provide a control device of a hybrid vehicle capable of avoiding an engine from being disenabled to be started after vehicle travel starts.

### [Solution to Problem]

According to an aspect of the present invention, there is provided a control device of a hybrid vehicle, according to claim 1. Preferred embodiments are disclosed in the dependent claims.

### [Advantageous Effect of Invention]

According to the present invention, it is possible to avoid an engine from being disenabled to be started after vehicle travel starts.

### [Brief Description of Drawings]

Fig. 1 is a diagram of a hybrid vehicle mounted with a control device according to an embodiment of the present invention.
Fig. 2 is a block diagram showing an inverter in the hybrid vehicle.
Fig. 3 is a flow chart showing a procedure of an initial system-start process to be performed in the control device.

### [Description of Embodiment]

A control device according to an embodiment of the present invention is mounted on a hybrid vehicle including an engine, and a high-voltage system with a first motor generator, the hybrid vehicle being configured to travel using at least one of the engine and the first motor generator as a driving source, the control device including a start control unit to perform an initial system-start process of initially starting a system of the hybrid vehicle, wherein in the initial system-start process, the start control unit: determines whether the engine may be eventually disenabled to be started, based on a state of the hybrid vehicle; performs an HEV start process of starting the engine to thereafter start the high-voltage system if it determines that the engine may be eventually disenabled to be started; and otherwise performs an EV start process of starting the high-voltage system without starting the engine.

According to the control device, it is possible to avoid an engine from being disenabled to be started after vehicle travel starts.

### [Embodiment]

Hereinafter, referring to Figs., a control device of a hybrid vehicle according to an embodiment of the present invention will be described.

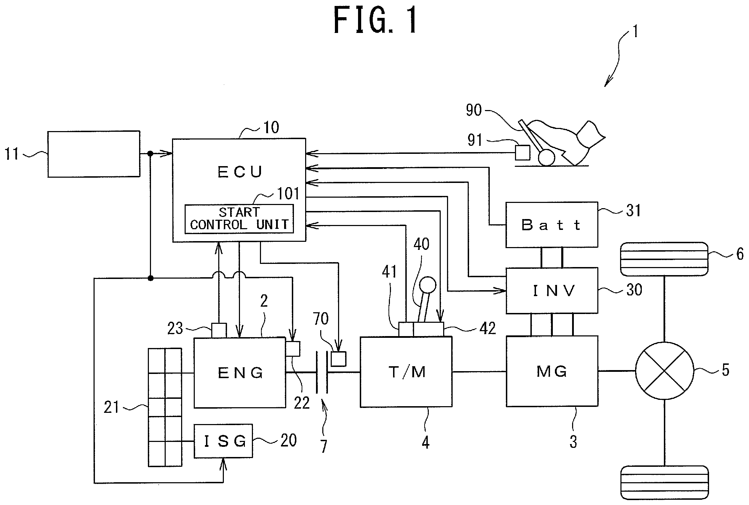

As shown in FIG. 1, a hybrid vehicle 1 includes an engine 2 as a driving source, a motor generator 3 for driving as a driving source, a transmission 4, a differential 5, driving wheels 6, and an ECU 10 (Electronic Control Unit).

The engine 2 is formed with cylinders, being configured to perform, for each cylinder, a series of four steps of an intake step, a compression step, an expansion step and an exhaust step.

The engine 2 is connected with an ISG 20 (Integrated Starter Generator) as an engine starter. Specifically, the ISG 20 is connected to a crankshaft of the engine 2 via a belt member such as a belt 21, which is of a motor generator.

The ISG 20 has a motor function of rotating with supplied electric power to thereby rotate the engine 2 and a generator function of converting a rotation power inputted from the crankshaft into electric power.

The engine 2 is also connected with a starter motor 22 as an engine starter. The starter motor 22 includes a pinion provided at a tip portion of a rotation shaft, the pinion being configured to mesh with a ring gear attached to the crankshaft of the engine 2 to thereby transmit a driving force from the starter motor 22 to the crankshaft. As such, the starter motor 22 is configured to rotate with supplied electric power to thereby rotate the engine 2.

The engine 2 is provided with a water temperature sensor 23 to detect temperature of a cooling water in the engine 2 and send the detection result to the ECU 10.

The motor generator 3 has a motor function of applying a driving force by an electric power supplied from a high-voltage battery 31 through an inverter 30, and a generator function of generating a regenerative electric power with a counter driving force inputted from the differential 5.

The inverter 30 is controlled by the ECU 10, to convert DC power supplied from the battery 31 into three-phase AC power and supply the converted AC power to the motor generator 3 and to convert three-phase AC power generated by the motor generator 3 into DC power and charge the high-voltage battery 31 with the converted DC power.

The high-voltage battery 31 is a secondary battery such as a lithium ion battery.

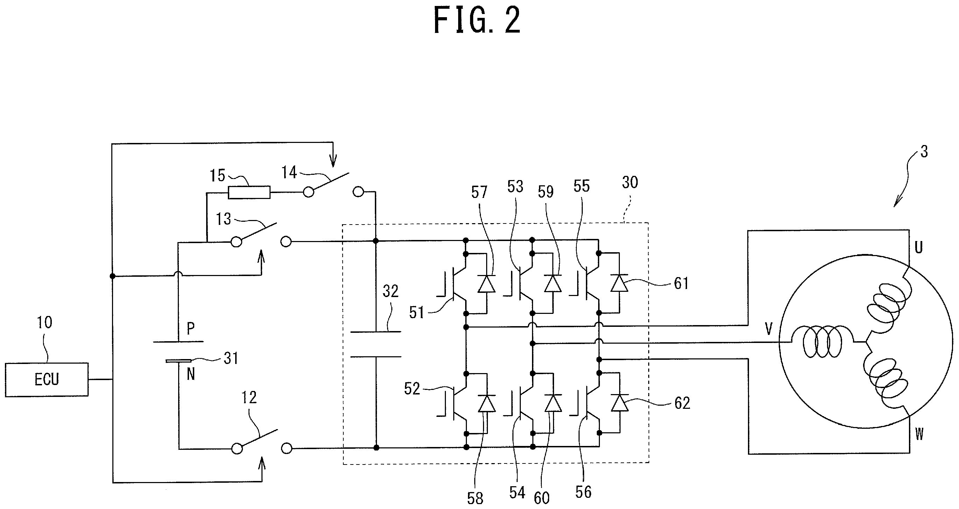

As shown in FIG. 2, the inverter 30 includes a smoothing capacitor 32, switching elements 51, 52, 53, 54, 55, 56, and diodes 57, 58, 59, 60, 61, 62.

The smoothing capacitor 32 is connected to the high-voltage battery 31 so that anode and cathode of the smoothing capacitor 32 are respectively connected to positive and negative electrodes of the high-voltage battery 31, to thereby smooth voltage of DC power between the positive and negative electrodes.

The switching elements 51, 52, 53, 54, 55, 56 are controlled with a control command of which a duty ratio is controlled by the ECU 10, so that an alternative current, of which direction and amount continuously change, flows in each of U-phase, V-phase, and W-phase with a phase difference of 120 degree. Thereby, a stator of the motor generator 3 forms a rotating magnetic field to thereby rotate a rotor thereof.

Between the inverter 30 and the high-voltage battery 31, there are provided negative and positive electrode side relays 12, 13 as main relays, a precharge relay 14, and a precharge resistance 15, the precharge relay 14 and the precharge resistance 15 being interconnected in series, the positive electrode side relay 13 being in parallel to them.

The negative electrode side relay 12 is configured to be switched, in accordance with a main relay driving output signal outputted from the ECU 10, between a conduction state where the negative electrode of the high-voltage battery 31 and the cathode of the smoothing capacitor 32 are electrically connected to each other, and a non- conduction state where these are electrically disconnected from each other. In other words, the negative electrode side relay 12 is configured to be switched between ON and OFF state.

For example, the negative electrode side relay 12 is controlled to be placed in the conduction state when the motor generator 3 is operated.

Also, the positive electrode side relay 13 is configured to be switched, in accordance with the main relay driving output signal outputted from the ECU 10, between a conduction state where the positive electrode of the high-voltage battery 31 and the anode of the smoothing capacitor 32 are electrically connected to each other, and a non-conduction state where these are electrically disconnected from each other. In other words, the positive electrode side relay 13 is configured to be switched between ON and OFF state.

For example, the positive electrode side relay 13 is controlled to be placed in the conduction state when the motor generator 3 is operated.

The precharge relay 14 is configured to be switched, in accordance with a precharge relay driving output signal outputted from the ECU 10, between a connection state where the precharge resistance 15 is electrically connected to the positive electrode side relay 13 in parallel, and a disconnection state where the precharge resistance 15 is electrically disconnected from the positive electrode side relay 13. In other words, the precharge relay 14 is configured to be switched between ON and OFF state.

For example, the precharge relay 14 is controlled to be placed in the connection state (i.e., turned ON) before the motor generator 3 is operated and to be placed in the disconnection state (i.e., turned OFF) after the positive electrode side relay 13 is placed in the conduction state (i.e., turned ON).

A high-voltage system is constituted of high-voltage components to be supplied with an electric power from the high-voltage battery 31, and other components relating thereto. Specifically, the high-voltage system includes the motor generator 3, the inverter 30, the high-voltage battery 31, the negative and positive electrode side relays 12, 13, the precharge relay 14, and the precharge resistance 15, for example. The high-voltage system may include an electric water pump to cool the high-voltage components, and an electric negative pressure pump to ensure negative pressure during EV travel in which the hybrid vehicle 1 is driven with driving force from only the motor generator 3.

Note that in the high-voltage system, at least there may be included the motor generator 3, the inverter 30, the high-voltage battery 31, and the negative and positive electrode side relays 12, 13.

As shown in FIG. 1, the transmission 4 is configured to change, at a shift ratio corresponding to one of shift stages, a rotation speed inputted from the engine 2 and output it. An output shaft of the transmission 4 is connected to the left and right driving wheels 6 via the differential 5. An output shaft of the motor generator 3 is connected to that of the transmission 4.

As shift stages to be established in the transmission 4, there are first (low-speed) to fifth (high-speed) forward shift stages and a reverse shift stage. The number of forward shift stages is to be determined depending on the specification of the hybrid vehicle 1, not limited to 5 (first to fifth shift stages).

The shift stages in the transmission 4 are configured to be switched therebetween by a shift select actuator 42, the shift select actuator 42 being controlled by the ECU 10.

The ECU 10 switches between the shift stages in the transmission 4 in accordance with a shift position of a shift lever 40 to be operated by a driver. As the shift position, the shift lever 40 includes, e.g., a forward position (D range), a motor speed limitation position (B range), a reverse position (R range), a neutral position (N range), and a parking position (P range), one of which is selected by the driver.

The selected shift position is detected by a shift position sensor 41. The shift position sensor 41 is connected to the ECU 10, to send the detection result to the ECU 10.

A clutch 7 is provided on a power transmission path between the engine 2 and the transmission 4, such as a friction clutch. That is, the engine 2 and the transmission 4 are interconnected via the clutch 7.

The clutch 7 is operated by a clutch actuator 70 to thereby be switched to any one of an engaged state where power is transmitted between the engine 2 and the transmission 4, a released state where no power is transmitted therebetween, and a partial clutch engagement state where a torque is transmitted with a rotational difference therebetween. The clutch actuator 70 is connected to the ECU 10, to be controlled thereby.

The hybrid vehicle 1 also includes a low-voltage battery 11. The low-voltage battery 11 is constituted of a lead battery, for example. The low-voltage battery 11 is configured to supply electrical loads, such as the ISG 20, the starter motor 22, and the ECU 10, with electric power.

The hybrid vehicle 1 also includes an accelerator pedal 90 to be operated (depressed) by the driver. The depressed amount thereof is to be detected by an accelerator pedal position sensor 91. The accelerator pedal position sensor 91 to detect the depressed amount of the accelerator pedal 90 as an accelerator opening is connected to the ECU 10 to thereby send a signal thereto, the signal corresponding to the accelerator opening.

The ECU 10 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECU 10, with various constants and maps. That is, the CPU executes the program stored in the ROM using the RAM as an operation area, causing the computer unit to function as the ECU 10.

In such a hybrid vehicle 1, at least one of the engine 2 and the motor generator 3 is used as a driving force, at a vehicle travel.

At an initial system-start of starting a system of the hybrid vehicle 1 in response to an operation to an ignition switch (e.g., ignition-on), the ECU 10 determines, based on a state of the hybrid vehicle 1, whether the engine 2 may be eventually disenabled to be started, and performs an HEV start of starting the high-voltage system while starting the engine 2 if it determines that the engine 2 may be eventually disenabled to be started, otherwise performs an EV start of starting the high-voltage system without starting the engine 2.

Note that "starting the high-voltage system" means electrically interconnecting the inverter 30 and the high-voltage battery 31 to supply the motor generator 3 with electric power.

Specifically, the ECU 10 includes a start control unit 101. The start control unit 101 performs, at the initial system-start, an engine start determination of determining whether the engine 2 may be eventually disenabled to be started, based on a state of the hybrid vehicle 1.

At the engine start determination, e.g., if a condition that the current voltage (hereinafter also referred to as "voltage" ) of the low-battery 11 is higher than a predetermined voltage value is non-established, the start control unit 101 determines that the engine 2 may be eventually disenabled to be started.

With the engine start determination, the start control unit 101 performs an engine cooling water temperature determination of determining whether the cooling water temperature exceeds a predetermined temperature.

As the result of the engine start determination, when determining that the engine 2 may be eventually disenabled to be started, the start control unit 101 performs an HEV start process of starting the engine 2 to thereafter start the high-voltage system.

In contrast, as the result of the engine start determination, when determining that the engine 2 may not be eventually disenabled to be started, the start control unit 101 performs an EV start process of starting the high-voltage system with the engine 2 stopped (i.e., without starting the engine 2), in accordance with the engine cooling water temperature determination and a soak time determination to be described later.

Especially, in the HEV start process, the start control unit 101 begins starting the high-voltage system after the start of the engine 2 is completed. For example, the start of the engine 2 is determined to be completed if a rotation speed thereof exceeds a predetermined rotation speed.

Additionally, with the engine start determination and the engine cooling water temperature determination, the start control unit 101 performs a soak time determination of determining whether a soak time as being a lapse time (count time) after the system of the hybrid vehicle 1 is shut down is shorter than a predetermined time. As the result of the soak time determination, if determines that the soak time is not shorter than the predetermined time (i.e., the soak time is the predetermined time or longer), the start control unit 101 performs the HEV start process of starting the engine 2 to thereafter start the high-voltage system.

In contrast, as the result of the soak time determination, if determines that the soak time is shorter than the predetermined time, the start control unit 101 performs the EV start process of starting the high-voltage system with the engine 2 stopped, in accordance with the engine start determination and the engine cooling water temperature determination.

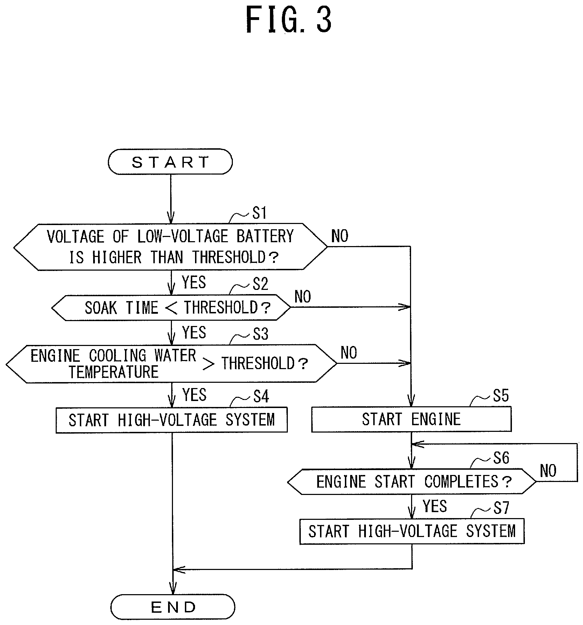

Next, referring to FIG. 3, an initial system-start process to be performed in the control device of the hybrid vehicle 1 will be explained. Note that the initial system-start process is to be begun in response to the driver's operation to the ignition switch, e.g., upon starting the system of the hybrid vehicle 1 following the driver's operation thereto.

At step S 1, the ECU 10 determines whether voltage of the low-voltage battery 11 is higher than a predetermined voltage value of threshold.

If "YES" at step S 1 (voltage of the low-voltage battery 11 is higher than the predetermined voltage value), the ECU 10 proceeds to step S2, otherwise (if "NO" at step S1) proceeding to step S5.

At step S2, the ECU 10 determines whether the soak time is shorter than a predetermined time value of threshold.

If "YES" at step S2 (the soak time is shorter than the predetermined time value), the ECU 10 proceeds to step S3, otherwise (if "NO" at step S2) proceeding to step S5.

At step S3, the ECU 10 determines whether the cooling water temperature in the engine 2 exceeds a predetermined temperature value of threshold.

If "YES" at step S3 (the cooling water temperature exceeds the predetermined temperature value), the ECU 10 proceeds to step S4, otherwise (if "NO" at step S3) proceeding to step S5.

At step S4, the ECU 10 starts the high-voltage system, subsequently terminating such an initial system-start process.

On the other hand, at step S5, the ECU 10 starts the engine 2, subsequently proceeding to step S6.

At step S6, the ECU 10 determines whether the start of the engine 2 is completed.

If "YES" at step S6 (the start of the engine 2 is completed), the ECU 10 proceeds to step S7, otherwise (if "NO" at step S6) repeating step S6.

At step S7, the ECU 10 starts the high-voltage system, subsequently terminating such an initial system-start process.

Note that in FIG. 3, a process to be performed at step S4 corresponds to the above-mentioned EV start process, and processes to be performed at steps S5 to S7 correspond to the above-mentioned HEV start process.

As mentioned above, in the present embodiment, the start control unit 101 performs the engine start determination of determining whether the engine 2 may be eventually disenabled to be started, based on the state of the hybrid vehicle 1 (e.g., voltage of the low-voltage battery 11). Following the engine start determination, if determines that the engine 2 may be eventually disenabled to be started, the start control unit 101 performs the HEV start process of starting the engine 2 to thereafter start the high-voltage system, otherwise performing the EV start process of starting the high-voltage system without starting the engine 2.

Thus, in the case of determining that the engine 2 may be eventually disenabled to be started, e.g., when the engine 2 is expected, unless the engine 2 is started at the initial system-start, to be disenabled to be started at switching from the EV travel to an HEV travel (in which both the engine 2 and the motor generator 3 are used as driving sources at vehicle travel) thereafter, the start control unit 101 preferentially starts the engine 2 (i.e., uses the low-voltage battery 11 preferentially to drive the engine starter) to thereafter start the high-voltage system, reliably starting the engine 2 to prevent voltage of the low-battery 11 from decreasing to thereby avoid the engine 2 from being disenabled to be started due to voltage drop in the low-battery 11 after the EV travel starts (i.e., avoid the EV travel from being disenabled to be switched to the HEV travel). For example, unless voltage of the low-voltage battery 11 is higher than the predetermined voltage value, the ECU 10 determines that the engine 2 may be eventually disenabled to be started.

Hence, it is possible to avoid the hybrid vehicle 1 from being disenabled to travel after the hybrid vehicle 1 starts to travel.

Note that the predetermined voltage value is of the total of a required voltage to drive the engine starter and a predetermined margin, for example.

In the HEV start process, the start control unit 101 may begin starting the high-voltage system after the engine start is completed.

Thereby, it is possible to prevent the negative and positive electrode side relays 12, 13 from being fixed at the start of the high-voltage system.

Specifically, as to such a fixation, voltage of the low-voltage battery 11 decreases at a cranking of the engine 2, causing a power source voltage for the ECU 10 to decrease. Due thereto, if, thereat, the high-voltage system is begun to be started, the decreased power source voltage for the ECU 10 causes a chattering to occur in the main relay driving output signal outputted from the ECU 10. Such a chattering may cause an arc heat to be generated in the negative and positive electrode side relays 12, 13 to thereby cause the fixation thereof.

Additionally, following the above-mentioned engine start determination, even unless the start control unit 101 determines that the engine 2 may be eventually disenabled to be started, it may perform the HEV start process when determining that the soak time is not shorter than the predetermined time value.

Thereby, when the soak time is relatively-long, i.e., an engine warm-up is necessary, the HEV start process is performed at the system initial start to thereby warm-up the engine 2, enabling a smooth traveling upon switching from the EV travel to the HEV travel thereafter.

Additionally, following the above-mentioned engine start determination, even unless the start control unit 101 determines that the engine 2 may be eventually disenabled to be started, the start control unit 101 may perform the HEV start process when determining that the engine cooling water temperature does not exceed the predetermined temperature value.

In this case (at step S5 through step S3), the engine 2 is preferable to be started using not the ISG 20 but the starter motor 22.

This is because, if the engine 2 is started using the ISG 20 under low-temperature environment, the belt 21 interposing between the engine 2 and the ISG 20 may be cut. In order to prevent the belt 21 from being cut under low-temperature environment, at the initial system-start when the engine cooling water temperature is the predetermined temperature value or lower, not the ISG 20 but the starter motor 22 is preferably used to start the engine 2. Note that in this case, although the engine 2 may be started using the starter motor 22 as needed after not the HEV start process but the EV start process is performed, in consideration of quietness, the engine 2 is preferably to be started using the starter motor 22 at the initial system-start. This is because, at the initial system-start where the system is started in response to user's start request, the user is not relatively-sensitive to an engine-start sound due to the starter motor 22.

In the present embodiment, a configuration where the output shafts of the motor generator 3 and the transmission 4 are interconnected is shown, being not limited to this. The hybrid vehicle 1 may include an EV mode where the hybrid vehicle 1 is allowed to travel with power from only the motor generator 3, and an HEV mode where the hybrid vehicle 1 is allowed to travel with power from both the engine 2 and the motor generator 3.

Additionally, in the present embodiment, the ECU 10 performs various determinations and calculations based on information from various sensors, but not limited to this. The hybrid vehicle 1 may include a communication unit communicable with an external device such as a server to perform them based on the information of various sensors sent from the communication unit, in which the communication unit receives the determination and calculation results from the external device and various controls are performs using the received determination and calculation results. In other words, the ECU 10 may cause the external device to perform the determinations and calculations.

Although the embodiment of the present invention is disclosed above, it is obvious that those skilled in the art can modify it without departing from the scope of the present invention, as disclosed in the appended claims.

### [Reference Signs List]

1: hybrid vehicle
2: engine
3: motor generator for driving (first motor generator)
10: ECU
11: low-voltage battery
12: negative electrode side relay (main relay)
13: positive electrode side relay (main relay)
20: ISG (engine starter, second motor generator)
21: belt
22: starter motor (engine starter)
23: water temperature sensor
30: inverter
31: high-voltage battery
101: start control unit

## Claims

1. A control device of a hybrid vehicle (1), the hybrid vehicle (1) including an engine (2), an engine starter (20, 22) to start the engine (2), a low-voltage battery (11) to supply the engine starter with electric power, and a high-voltage system with a first motor generator (3), the hybrid vehicle (1) being configured to travel using the engine (2) and the first motor generator (3) as driving sources,
the control device comprising:
a start control unit (101) to perform an initial system-start process of initially starting a system of the hybrid vehicle (1),
**characterized in that**:
in the initial system-start process, the start control unit (101):
determines whether to be impossible to complete a start of the engine (2) after starting the travelling, based on a voltage of the low-voltage battery (11);
performs an HEV start process of starting the engine (2) to thereafter start the high-voltage system., if it determines to be impossible to complete the start of the engine (2) after starting the travelling; and
otherwise performs an EV start process of starting the high-voltage system without starting the engine (2).

2. The control device as claimed in claim 1, wherein
the high-voltage system further includes:
a high-voltage battery (31);
an inverter (30) to convert DC power supplied from the high-voltage battery (31) into AC power; and
a main relay (12, 13) to electrically connect/disconnect the high-voltage battery (31) and the inverter (30) to/from each other, in response to a main relay driving output signal generated with electric power supplied from the low-voltage battery (11), and
in the HEV start process, the start control unit (101) begins starting the high-voltage system after the starting of the engine (2) is completed.

3. The control device as claimed in claim 1 or 2, wherein
in the initial system-start process, the start control unit (101):
also determines whether a soak time is shorter than a predetermined time value; and
performs the HEV start process upon determining that the soak time is not shorter than the predetermined time value.

4. The control device as claimed in any one of claims 1 to 3, wherein
the hybrid vehicle (1) further includes, as the engine starters (20, 22), a second motor generator (20) and a starter motor (22), the second motor generator being connected to a crankshaft of the engine (2) via a belt member (21), and
in the initial system-start process, the start control unit (101):
also determines whether a cooling water temperature of the engine (2) exceeds a predetermined temperature value; and
performs, upon determining that the cooling water temperature does not exceed the predetermined temperature value, the HEV start process in which the engine (2) is started using the starter motor (22).

## Patentansprüche

1. Steuervorrichtung eines Hybridfahrzeugs (1), wobei das Hybridfahrzeug (1) einen Motor (2), einen Motorstarter (20, 22) zum Starten des Motors (2), eine Niederspannung-Batterie (11) zum Versorgen des Motorstarters mit elektrischer Leistung und ein Hochspannung-System mit einem ersten Motorgenerator (3) umfasst, wobei das Hybridfahrzeug (1) dazu eingerichtet ist, sich unter Verwendung des Motors (2) und des ersten Motorgenerators (3) als Antriebsquellen fortzubewegen,
wobei die Steuervorrichtung umfasst:
eine Start-Steuereinheit (101) zum Durchführen eines anfänglichen System-Startprozesses eines anfänglichen Startens eines Systems des Hybridfahrzeugs (1),
**dadurch gekennzeichnet, dass**:
in dem anfängliche System-Startprozess die Start-Steuereinheit (101):
bestimmt, ob es unmöglich ist, einen Start des Motors (2) nach einem Starten der Fortbewegung abzuschließen, auf Grundlage einer Spannung der Niederspannung-Batterie (11);
einen HEV-Startprozess eines Startens des Motors (2) durchführt, um hiernach das Hochspannung-System zu starten, wenn bestimmt wird, dass es unmöglich ist, den Start des Motors (2) nach dem Starten der Fortbewegung abzuschließen; und
ansonsten einen EV-Startprozess eines Startens des Hochspannung-Systems ohne Starten des Motors (2) durchführt.

2. Steuervorrichtung nach Anspruch 1, wobei
das Hochspannung-System ferner umfasst:
eine Hochspannung-Batterie (31);
einen Wechselrichter (30) zum Umwandeln von durch die Hochspannung-Batterie (31) gelieferter DC-Leistung in AC-Leistung; und
ein Haupt-Relais (12, 13) zum elektrischen Verbinden/Trennen der Hochspannung-Batterie (31) und des Wechselrichters (30) mit/voneinander in Reaktion auf ein das Haupt-Relais treibendes Ausgabesignal, welches mit elektrischer Leistung erzeugt wird, welche von der Niederspannung-Batterie (11) geliefert wird, und
in dem HEV-Startprozess die Start-Steuereinheit (101) das Starten des Hochspannung-Systems beginnt, nachdem das Starten des Motors (2) abgeschlossen ist.

3. Steuervorrichtung nach Anspruch 1 oder 2, wobei
in dem anfänglichen System-Startprozess die Start-Steuereinheit (101):
ebenfalls bestimmt, ob eine Glühzeit kürzer als ein vorbestimmter Zeitwert ist; und
den HEV-Startprozess auf ein Bestimmen hin durchführt, dass die Glühzeit nicht kürzer als der vorbestimmte Zeitwert ist.

4. Steuervorrichtung nach einem der Ansprüche 1 bis 3, wobei
das Hybridfahrzeug (1) ferner als die Motorstarter (20, 22) einen zweiten Motorgenerator (20) und einen Startermotor (22) umfasst, wobei der zweite Motorgenerator mit einer Kurbelwelle des Motors (2) mittels eines Riemenelements (21) verbunden ist, und
in dem anfänglichen System-Startprozess die Start-Steuereinheit (101):
ebenfalls bestimmt, ob eine Kühlwasser-Temperatur des Motors (2) einen vorbestimmten Temperaturwert übersteigt; und
auf ein Bestimmen hin, dass die Kühlwasser-Temperatur den vorbestimmten Temperaturwert nicht übersteigt, den HEV-Startprozess durchführt, in welchem der Motor (2) unter Verwendung des Startermotors (22) gestartet wird.

## Revendications

1. Dispositif de commande d'un véhicule hybride (1), le véhicule hybride (1) comportant un moteur (2), un démarreur de moteur (20, 22) pour démarrer le moteur (2), une batterie basse tension (11) pour alimenter le démarreur de moteur en courant électrique, et un système haute tension avec un premier générateur de moteur (3), le véhicule hybride (1) étant configuré pour se déplacer au moyen du moteur (2) et du premier générateur de moteur (3) en tant que sources d'entraînement,
le dispositif de commande comprenant :
une unité de commande de démarrage (101) pour réaliser un processus de démarrage de système initial consistant à démarrer initialement un système du véhicule hybride (1),
**caractérisé en ce que** :
dans le processus de démarrage de système initial, l'unité de commande de démarrage (101) :
détermine s'il est impossible d'achever un démarrage du moteur (2) après le démarrage du déplacement, sur la base d'une tension de la batterie basse tension (11) ;
réalise un processus de démarrage de VEH consistant à démarrer le moteur (2) pour démarrer le système haute tension après cela, s'il détermine qu'il est impossible d'achever le démarrage du moteur (2) après le démarrage du déplacement ; et
sinon réalise un processus de démarrage du VE consistant à démarrer le système haute tension sans démarrer le moteur (2).

2. Dispositif de commande selon la revendication 1, dans lequel
le système haute tension comporte en outre :
une batterie haute tension (31) ;
un onduleur (30) pour convertir le courant continu amené à partir de la batterie haute tension (31) en courant alternatif ; et
un relais principal (12, 13) pour connecter/déconnecter électriquement la batterie haute tension (31) et l'onduleur (30) l'un à l'autre/l'un de l'autre, en réponse à un signal de sortie d'entraînement principal de relais généré avec du courant électrique amené à partir de la batterie basse tension (11), et
dans le processus de démarrage de VEH, l'unité de commande de démarrage (101) commence le démarrage du système haute tension après que le démarrage du moteur (2) est achevé.

3. Dispositif de commande selon la revendication 1 ou 2, dans lequel
dans le processus de démarrage de système initial, l'unité de commande de démarrage (101) :
détermine également si un temps d'exposition est plus court qu'une valeur de temps prédéterminée ; et
réalise le processus de démarrage de VEH lors de la détermination que le temps d'exposition n'est pas plus court que la valeur de temps prédéterminée.

4. Dispositif de commande selon l'une quelconque des revendications 1 à 3, dans lequel
le véhicule hybride (1) comporte en outre, en tant que démarreurs de moteur (20, 22), un deuxième générateur de moteur (20) et un moteur de démarreur (22), le deuxième générateur de moteur étant connecté à un vilebrequin du moteur (2) par le biais d'un élément de courroie (21), et
dans le processus de démarrage de système initial, l'unité de commande de démarrage (101) :
détermine également si une température d'eau de refroidissement du moteur (2) dépasse une valeur de température prédéterminée ; et
réalise, lors de la détermination que la température d'eau de refroidissement ne dépasse pas la valeur de température prédéterminée, le processus de démarrage de VEH dans lequel le moteur (2) est démarré au moyen du moteur de démarreur (22).
